# EUROPÄISCHE PATENTSCHRIFT

(11) **EP 3 648 575 B1**
(45) Veröffentlichungstag und Bekanntmachung des Hinweises auf die Patenterteilung: **06.09.2023**
(21) Anmeldenummer: 18730739.2
(22) Anmeldetag: 08.06.2018
(51) Int. Cl.: A01G 27/04, A01G 9/033

(54) **GEBÄUDEFLÄCHEN-PFLANZSYSTEM**
PLANTING SYSTEM FOR BUILDING SURFACES
SYSTÈME DE PLANTATION POUR SURFACE D'UN BÂTIMENT

(30) Priorität: 04.07.2017 DE 102017114887
(43) Veröffentlichungstag der Anmeldung: 13.05.2020
(73) Patentinhaber: Plattner, Wolfgang, 85247 Schwabhausen (DE)
(72) Erfinder: Plattner, Wolfgang, 85247 Schwabhausen (DE)
(74) Vertreter: Meissner Bolte Partnerschaft mbB
(86) Internationale Anmeldenummer: PCT/EP2018/065178
(87) Internationale Veröffentlichungsnummer: WO 2019/007630

(56) Entgegenhaltungen:
- EP-A1- 2 659 770
- EP-A1- 2 896 287
- DE-A1- 4 309 601
- DE-A1-102009 032 116
- DE-U1-202013 009 914

## Beschreibung

Die Erfindung betrifft ein Gebäudeflächen-Pflanzsystem nach Anspruch 1.

Pflanzen werden üblicherweise in genormten Kulturtöpfen mit einer oder mehreren Bewässerungs- und Wurzelwachstumsöffnung(en), die auch als Kulturtopfschlitze bezeichnet werden, kultiviert und vermarktet. Hydrokulturpflanzen werden meist im Kulturtopf auf dem Boden eines wasserdichten Gefäßes, beispielsweise eines Pflanzgefäßes der eingangs genannten Art, gesetzt, und mit Tongranulat (Blähton) gefüllt. Erdpflanzen werden üblicherweise in ihrem Kulturtopf belassen und in einen Übertopf gestellt oder in ein Erdbewässerungssystem unter Verwendung von Pflanzsubstraten gepflanzt.

Die zunehmende Versiegelung von Flächen in Freiräumen durch beispielsweise Gebäudebebauung, Flächenverdichtungen, Stadtbebauungen, Straßen- und Gehwegbau erweckt den Wunsch diese versiegelten Flächen einfach, kostengünstig und ohne aufwendige Baumaßnahmen zu begrünen.

Insbesondere wächst der Wunsch hinsichtlich der Begrünung von Gebäuden durch Dachflächenbegrünungen von Flachdächern, Dachterrassenbegrünungen, Fassadenbegrünungen, Terrassenbegrünungen, Balkonbegrünungen, Hofflächenbegrünungen, sowie Raumbegrünungen mit Wandbegrünungs- und Deckenbegrünungssystemen.

Oftmals werden Dachflächen extensiv begrünt. Auf die vorhandenen Dachabdichtungen wird flächig Tongranulat verteilt, anschließend wird darauf eine Drainagematte verlegt, wobei oberhalb der Drainagematte, die Fläche mit Pflanzsubstraten befüllt wird. Im Anschluss daran werden flächig Bodendecker, Stauden, Moose etc. gepflanzt. Dies führt zu einer zusätzlichen großen Last auf dem Dach.

Des Weiteren kommt es aufgrund dieser Pflanzflächenaufbauten nach geraumer Zeit regelmäßig zu Wurzelverdichtungen verbunden mit geringer Luftzufuhr im Wurzelbereich und damit einhergehender Wurzelfäulnis die oftmals zu einem flächigen Ausfall der Begrünungen führt. Zudem sind kaputte oder kranke Pflanzflächen aufgrund der Wurzelverdichtungen sehr schwer und aufwendig zu entfernen und zu ersetzen.

Außerdem sind herkömmliche Dachbepflanzungs-Systeme mit entsprechenden Drainage-Problemen verbunden. Demnach müssen auf Dachflächen oftmals Schrägen ausgebildet werden, so dass überschüssiges Wasser ablaufen kann.

Außerdem besteht das Problem bekannter Dachbepflanzungs-Systeme darin, dass je nach ausgewählter Bepflanzung das Dach zusätzlich mit großen Mengen von Wasser versorgt werden muss. Dachbepflanzungs-Systeme ohne zusätzliche Bewässerungsanlage nehmen oftmals das Eintrocknen der Bepflanzung, insbesondere der bepflanzten Vegetationsdecke, in Kauf. Zudem führen diese Dachbegrünungs-Systeme aufgrund der Wurzelverdichtungen oftmals zu Schäden der darunterliegenden Flachdachabdeckungen und zu entsprechenden Baukörperschäden. Reparaturen sind oftmals nur durch vollkommenen Abtrag der Begrünungen möglich und sind entsprechend arbeits- und kostenintensiv. Relevanter Stand der Technik sind EP 2 896 287 A1, DE 20 2013 009914 U1, EP 2 659 770 A1, DE 43 09 601 A1 und DE 10 2009 032116 A1.

Aus dem Vorgenannten ergibt sich die Aufgabe der vorliegenden Erfindung, wonach ein weiterentwickeltes Gebäudeflächen-Pflanzsystem angegeben werden soll. Zum einen soll das weiterentwickelte Gebäudeflächen-Pflanzsystem die zusätzlich generierte Dachlast verringern. Zudem soll dieses Gebäudeflächen-Pflanzsystem mit einer relativ geringen Menge von Wasser versorgbar sein.

Des Weiteren soll ein kostengünstiger Kulturtopf zur Verfügung gestellt werden, der über ein zusätzliches Bewässerungssystem verfügt und relativ geringe Wassermengen effektiv zur Bewässerung nutzen kann.

Hinsichtlich des Gebäudeflächen-Pflanzsystems wird diese Aufgabe durch den Gegenstand des Patentanspruches 1 gelöst.

Die erstgenannte Aufgabe wird dadurch gelöst, dass das Gebäudeflächen-Pflanzsystem mindestens ein auf einem Gebäude angeordnetes Wasserbecken mit einem Wasser-Überlaufsystem aufweist, wobei das Wasser-Überlaufsystem in dem Wasserbecken einen Wasserpegel von 10 cm - 25 cm einstellt. In dem Wasserbecken ist mindestens ein Moduleinsatz ausgebildet, in dem eine Pflanze, insbesondere ein Kulturtopf, einsetzbar ist oder auf dem eine Vegetationsdecke einsetzbar ist. Der Moduleinsatz ist derart ausgebildet, dass zwischen einem Boden des Wasserbeckens und dem Moduleinsatz ein Vegetationsraum gebildet ist, der vom Wasserpegel und einem zwischen dem Wasserpegel und dem Moduleinsatz ausgebildeten Atmosphären-Bereich gebildet ist.

Insbesondere wird die erstgenannte Aufgabe dadurch gelöst, dass das Gebäudeflächen-Pflanzsystem mindestens ein auf einer Dacheinheit eines Gebäudes angeordnetes Wasserbecken mit einer maximalen Beckentiefe von 30 cm, insbesondere von 20 cm, insbesondere von 15 cm, insbesondere von 10 cm, umfasst. In dem Wasserbecken ist mindestens ein Moduleinsatz ausgebildet, in dem eine Pflanze, insbesondere ein Kulturtopf, einsetzbar ist oder auf dem eine Vegetationsdecke einsetzbar ist.

Aufgrund der geringen Beckentiefe und/oder des geringen Wasserpegels des Wasserbeckens werden keine hohen zusätzlichen Dachlasten generiert. Aufgrund des mindestens einen Moduleinsatzes ist es möglich, einen Planzentopf, insbesondere einen Kulturtopf, im Wasserbecken anzuordnen und/oder eine Vegetationsdecke in das Wasserbecken einzusetzen.

Die Beckentiefe des Wasserbeckens und/oder der Wasserpegel im Wasserbecken beträgt in einer besonders bevorzugten Ausführungsform der Erfindung mindestens 10 cm und maximal 15 cm. Bei einem Beckentiefenbereich/ Wasserpegel zwischen 10 und 15 cm handelt es sich um eine ideale Beckentiefe/um einen idealen Wasserpegel, die/der einen guten Kompromiss hinsichtlich der zusätzlichen Last auf das Dachelement und einer ausreichenden Wassermenge darstellt.

Als Vegetationsdecken sind bei dem erfindungsgemäßen Gebäudeflächen-Pflanzsystem Rasenflächen oder Gräserflächen oder Steingartenflächen oder Moosflächen oder Flächen, gebildet aus niedrigwachsenden Pflanzen, wie beispielsweise Hauswurz, denkbar.

In die Kulturtöpfe und/oder in die Moduleinsätze können Pflanzen in jeder beliebigen Größe und Art, abhängig vom gewünschten Aufstellungsort, eingehängt werden.

Das Wasserbecken ist plan zu einer schrägen Dacheinheit ausgebildet. Es ist somit nicht notwendig auf der Dacheinheit Schrägen bzw. schräge Flächen auszubilden oder das Wasserbecken schräg zu montieren. Dies dient einer einfachen Montage des Wasserbeckens auf der Dacheinheit. Das Wasserbecken kann somit unabhängig von der jeweiligen Gebäudesituation auf jeder Dacheinheit montiert bzw. angeordnet werden.

Die Dacheinheit kann Teil eines Wohngebäudes oder eines Bürogebäudes oder eines Carports oder einer Garage oder einer Überdachung sein. Als Gebäude werden vorliegend Bauwerke definiert, die Räume einschließen, betreten werden können und dem Aufenthalt von Menschen, Tieren oder der Lagerung von Sachen dienen. Ein Gebäude gemäß vorliegender Definition besitzt nicht zwingend Wände oder einen Keller, jedoch immer ein Dach.

Der mindestens eine Moduleinsatz kann als Topfeinsatz ausgebildet sein, in dem ein Topf, insbesondere ein Kulturtopf, einsetzbar ist. Der Kulturtopf weist vorzugsweise einen Kulturtopfmantel und einen Kulturtopfboden auf, wobei der Kulturtopfboden in einem Höhenabstand zu einem Boden des Wasserbeckens positioniert ist. Der Kulturtopf kann des Weiteren mindestens eine Bewässerungsöffnung und/oder mindestens eine Wurzelwachstumsöffnung aufweisen.

Vorzugsweise ist der Kulturtopf derart in den Moduleinsatz einsetzbar und befestigbar, dass unterhalb des Moduleinsatzes ein im Wesentlichen abgedichteter Atmosphärenbereich und ein Vegetationsraum gebildet sind, in welchen ein unterer Abschnitt des Kulturtopfes ragt, wobei der Moduleinsatz derart ausgebildet ist, dass der Kulturtopfboden in einem Höhenabstand zu einem Boden des Wasserbeckens positionierbar ist.

Demnach ist vorzugweise vorgesehen, dass der Moduleinsatz insbesondere zum Halten von Hydrokulturpflanzen ausgebildet ist, wobei der Arbeitsaufwand und die Arbeitszeit für die Bepflanzung, die Pflege oder die Arbeitszeit für den Austausch/Ersatz von (Kultur)pflanzen wesentlich verkürzt ist und zusätzlich das Pflanzenwachstum gefördert wird.

Die eingangs genannten Nachteile bekannter Pflanzsysteme werden demnach mit dem erfindungsgemäßen Gebäudeflächen-Pflanzsystem überwunden. Dies ist darauf zurückzuführen, dass unterhalb des Moduleinsatzes ein im Wesentlichen abgedichteter Vegetationsraum gebildet sein kann, in welchen ein unterer Abschnitt des Kulturtopfes ragt, wobei sich zur Bildung einer Klimazone unterhalb des Moduleinsatzes und oberhalb der Wasseroberfläche ein Atmosphärenbereich erstreckt, der nach außen durch den Moduleinsatz und/oder durch eine Wand des Moduleinsatzes und/oder durch eine Umrandung des Wasserbeckens abgeschlossen/umschlossen ist.

Im Folgenden kann als Wasser auch eine wässrige Nährstofflösung oder eine wasserhaltige Nährstofflösung oder ein mit Nährstoffen versetztes Wasser verstanden werden.

Der gebildete Vegetationsraum wird von der Umwelt zum Teil entkoppelt, wodurch die Luftwechselrate zwischen Vegetationsraum und Umwelt herabgesetzt wird. Daher ist ein Luftaustausch mit der Atmosphäre hauptsächlich nur noch über die Wurzelwachstums- und Bewässerungsöffnung des Kulturtopfes, und damit unmittelbar im Bereich des Wurzelwerks der Pflanze möglich. Dies sorgt zum einen für ein gutes Wachstumsklima im Vegetationsraum mit einer hohen Luftfeuchtigkeit, und zum anderen verhindert es ungehindertes Verdunsten von Wasser oder wässriger Nährlösung aus dem Vegetationsraum direkt nach außen.

Das Wasser bzw. die Nährlösung verbleibt unter dem Moduleinsatz, insbesondere unter einem horizontalen Halteabschnitt des Moduleinsatzes, und lagert sich beim Verdunsten an der Unterfläche des Moduleinsatzes, insbesondere des Halteabschnittes des Moduleinsatzes, sowie an den Seiten des Kulturtopfes ab und tropft wieder in das Wasserbecken. Der Wasserverbrauch kann gegenüber herkömmlichen Pflanzsystemen nachhaltig um bis zu 80 % reduziert und sonst notwendige Gießintervalle wesentlich verlängert werden. Gießperioden, beispielsweise für "Mietpflanz-Konzepte", können wesentlich verlängert werden. Dies spart Personal- und/oder Verwaltungskosten.

Ein weiterer wesentlicher Vorteil des Moduleinsatzes, der als Topfeinsatz ausgebildet ist, besteht darin, dass kein organisches Substrat oder Granulat für eine Bepflanzung, die Befestigung und Positionierung des Kulturtopfes und/oder eines Wasserstandanzeigers benötigt werden. Außerdem wird eine Wasserverdrängung durch das Substrat vermieden. Das dadurch zusätzlich zur Verfügung stehende Wasserreservoir wird dadurch wesentlich vergrößert. Des Weiteren können die Bewässerungsöffnungen des Kulturtopfes nicht mehr von Schwemmstoffen zugesetzt werden bzw. die Schwemmstoffe können sich nicht mehr im Bereich der Bewässerungsöffnungen ablagern, da diese Bewässerungsöffnungen nicht mehr mit Substrat bedeckt sind und sich nicht am Gefäßboden befinden.

Dadurch werden auch Wurzelverdichtungen im Bereich des Kulturtopfes und insbesondere im Wasserbecken vermieden, und eine daraus resultierende Wurzelfäulnis ausgeschlossen. Die Vitalität der Pflanzen wird dadurch nachhaltig verbessert, und die Haltbarkeit maßgeblich erhöht. Durch die Vermeidung der Wurzelverdichtung sowie der Substratverdichtung kann es auch nicht zu Rissbildungen in Pflanzgefäßen kommen.

Mit Hilfe des erfindungsgemäßen Gebäudeflächen-Pflanzsystems kann einfach und leicht ein Wurzelverjüngungsschnitt der Nährstoffwurzeln durchgeführt werden, da sich im Bereich der Nährstoffwurzeln keinerlei Füllmaterial befindet. Ein Wurzelverjüngungsschnitt stärkt die Vitalität der Pflanzen.

Der unterhalb des Moduleinsatzes bzw. Topfeinsatzes liegende Vegetationsraum besteht im Wesentlichen nur aus Luft und Wasser. Im Falle eines notwendig werdenden Ersetzens einer Pflanze kann der Kulturtopf mit Pflanze sehr einfach ausgetauscht werden. Der wesentliche Vorteil besteht darin, dass nicht das komplette Gefäß mit Tongranulat entleert und wieder befüllt werden muss.

Das Wasser bleibt klar, sauber und geruchsneutral, ohne biologisch umzukippen. Ein ganz wesentlicher Vorteil ist die optimale Sauerstoffzufuhr im Wurzel bereich. Zusammenfassend können so übliche und nötige Umpflanzungen auf Dauer entfallen.

In einer Ausführungsform der Erfindung ist der Moduleinsatz, der als Topfeinsatz ausgebildet ist, als ein Flächenelement gefertigt. Insbesondere ist der Moduleinsatz bzw. der Topfeinsatz als ein im Wesentlichen geschlossenes Flächenelement bevorzugt aus Metall oder Edelstahl zur Verstärkung einer Kondensatbildung im Wurzelvegetationsraum gefertigt. Vorzugsweise ist der Kulturtopf aus einem gut wärmeleitenden Material gebildet.

In einer Ausführungsform der Erfindung ist der Moduleinsatz, der als Topfeinsatz ausgebildet ist, als ein Blech oder Flächenelement gefertigt. Insbesondere ist der Moduleinsatz bzw. der Topfeinsatz als ein im Wesentlichen geschlossenes Blech oder Flächenelement zur Verstärkung einer Kondensatbildung gefertigt. Vorzugsweise ist der Topfeinsatz aus einem gut wärmeleitenden Material gebildet.

Vorzugsweise ist der Moduleinsatz/Topfeinsatz derart form- und/oder kraftschlüssig oder stoffschlüssig mit einem Distanzelement oder einer im Wasserbecken befindlichen Zwischenwand oder einer Wasserbeckenwand oder einer Modulseitenwand derart verbindbar oder verbunden, dass sich der Topfeinsatz über dem Boden des Wasserbeckens befindet. Diese Verbindung gibt dem Moduleinsatz/Topfeinsatz Halt und definiert dessen Abstand zur Wasseroberfläche und/oder zum Wasserbeckenboden. Daraus resultiert die Höhe des Vegetationsraums und bietet den Vorteil, dass die Gestaltung des Moduleinsatzes/Topfeinsatzes und des zu seiner Herstellung verwendeten Herstellungsverfahrens relativ frei wählbar ist.

So hat eine Verbindung mit der Wand des Wasserbeckens den Vorteil, dass keine weiteren Bauteile oder Elemente benötigt werden. Mit Hilfe von im Wasserbecken befindlichen Zwischenwänden oder Modulseitenwänden können großflächig mehrere Moduleinsätze/Topfeinsätze befestigt werden.

Vorzugsweise sind im Wasserbecken mehrere Moduleinsätze ausgebildet. In einer besonders bevorzugten Ausführungsform der Erfindung können mehrere Reihen von Moduleinsätzen, insbesondere mehrere Reihen von Topfeinsätzen, ausgebildet sein. Hierzu sind entsprechend mehrere Zwischenwände oder Modulseitenwände im Wasserbecken ausgebildet.

Es ist möglich, dass ein Topfeinsatz mehrere Öffnungen für mehrere Kulturtöpfe aufweist. Demnach ist es möglich, dass beispielsweise vier im Wasserbecken ausgebildete Zwischenwände oder Modulseitenwände und ein mit diesen verbundener Topfeinsatz einen abgeschlossenen Vegetationsraum bilden, wobei in den Vegetationsraum mehrere, beispielsweise mindestens zwei Kulturtöpfe, insbesondere mindestens vier Kulturtopfböden, ragen können.

In einer weiteren Ausführungsform der Erfindung ist es möglich, dass das Gebäudeflächen-Pflanzsystem mehrere Moduleinsätze, insbesondere mehrere Topfeinsätze, aufweist, wobei diese auf unterschiedlichen Höhen montiert sind. Mit anderen Worten können die vertikalen Abstände mehrerer Topfeinsätze eines Gebäudeflächen-Pflanzsystems unterschiedliche Werte aufweisen. Dies hat den Vorteil, dass in dem Wasserbecken Kulturtöpfe unterschiedlicher Höhen eingesetzt werden können. Es ist möglich, dass Pflanzen mit unterschiedlich großen Wurzelballen im gleichen Wasserbecken eingesetzt werden können.

In einer weiteren Ausführungsform der Erfindung kann der Moduleinsatz einen Rahmen umfassen, an dem ein lochsiebartiges Element ausgebildet ist. Dieses lochsiebartige Element kann als Auflagefläche für eine Vegetationsdecke ausgebildet sein. Die Vegetationsdecke kann dabei direkt oder indirekt auf der Auflagefläche aufliegen. Beispielsweise ist es möglich, dass zwischen der Vegetationsdecke und der Auflagefläche eine Vliesschicht ausgebildet ist.

Mit anderen Worten kann gemäß einer weiteren Ausführungsform der Erfindung der Moduleinsatz einen Rahmen umfassen, in dem ein lochsiebartiges Element schwebend eingehängt ist. Dieses lochsiebartige Element dient als Vegetationskorb und kann für Flächenbegrünungen verwendet werden. Der Vegetationskorb kann dabei direkt oder indirekt auf dem Auflagerahmen aufliegen. Zusätzlich kann der Vegetationskorb am Boden mit einem Vlies belegt sein oder mit kapillaren Bewässerungsschnüren ergänzt sein.

Das lochsiebartige Element kann gitterartig und/oder siebartig und/oder geflechtartig ausgebildet sein. Das lochsiebartige Element ist beispielsweise in den Rahmen eingehängt oder auf diesen aufgelegt. Des Weiteren ist es möglich, dass der Rahmen sowie das lochsiebartige Element einteilig ausgebildet sind.

Aufgrund des als Auflagefläche dienenden Moduleinsatzes kann die Vliesschicht und/oder die Vegetationsdecke einfach entfernt werden. Mit anderen Worten kann aufgrund des als Auflagefläche dienenden Modulrahmens der Vegetationskorb einfach entfernt werden. Es kommt nicht zu einer Verwurzelung mit der Dacheinheit.

In einer Ausführungsform der Erfindung ist es möglich, dass das Gebäudeflächen-Pflanzsystem sowohl mindestens einen Moduleinsatz aufweist, der als Topfeinsatz ausgebildet ist und außerdem mindestens einen Moduleinsatz aufweist, der das lochsiebartige Element aufweist. Somit können in dieser Ausführungsform vorteilhafterweise sowohl Kulturtöpfe als auch Vegetationsdecken/ Vegetationskörbe gepflanzt werden.

Das Wasserbecken und/oder der mindestens eine Moduleinsatz ist/sind vorzugsweise aus Edelstahl gefertigt. Bei einem derartigen rostfreien Metall handelt es sich um ein äußerst widerstandsfähiges Material, so dass das Gebäudeflächen-Pflanzsystem insgesamt langlebig ausgebildet ist.

Das Gebäudeflächen-Pflanzsystem kann außerdem ein Wasser-Überlaufsystem aufweisen. Das Wasser-Überlaufsystem ist dabei als seitlich des Wasserbeckens angeordnete Überflutungsrinne ausgebildet.

Das Wasser-Überlaufsystem kann im konstruktiv einfachsten Fall als normaler Überlauf ausgebildet sein, der vorzugsweise mit dem Dachrinnensystem verbunden ist.

Des Weiteren ist es möglich, dass das Gebäudeflächen-Pflanzsystem ein Bodenablaufsystem, das in einem/in dem Boden des Wasserbeckens ausgebildet ist, aufweist.

Das Wasser-Überlaufsystem dient dem Ablauf überschüssigen Wassers. Dieses kann beispielsweise durch starke Niederschläge im Wasserbecken gebildet werden. Das Bodenablaufsystem dient vorzugsweise der Komplettentwässerung des Wasserbeckens. Somit kann das Wasserbecken, insbesondere der Boden des Wasserbeckens, sofern dies notwendig ist, entleert und gereinigt werden.

Das Wasser-Überlaufsystem und/oder das Bodenablaufsystem kann/können eine Filtervorrichtung aufweisen. Die Filtervorrichtung des Wasser-Überlaufsystems kann dabei als gitterartiges Element ausgebildet sein.

Die Filtervorrichtung eines/des Bodenablaufsystems kann beispielsweise als vor der Öffnung des Bodenablaufsystems ausgebildete Siebfläche konstruiert sein. Des Weiteren ist es möglich, dass im Bereich der Öffnung des Bodenablaufsystems ein gitterartiges Gehäuse, das vorzugsweise auf dem Boden des Wasserbeckens stehend ausgebildet ist, angeordnet ist. Mit Hilfe der beschriebenen Filtervorrichtungen können grobe Verschmutzungen, wie beispielsweise Pflanzenteile, Blätter oder ähnliche Verschmutzungen gefiltert werden. Mit anderen Worten wird verhindert, dass Pflanzenteile oder Blätter oder ähnliche Verunreinigungen in Abflussrohre des Wasser-Überlaufsystems und/oder des Bodenablaufsystems gelangen.

Das Gebäudeflächen-Pflanzsystem weist vorzugsweise einen Wasservorratsbehälter auf, der in vertikaler Richtung in einer Ebene unterhalb der Dacheinheit angeordnet ist. Im Wasservorratsbehälter kann beispielsweise Regenwasser gesammelt werden. Vorzugsweise handelt es sich bei dem Wasservorratsbehälter um einen Wassertank. Der Wasservorratsbehälter, insbesondere der Wassertank, kann vorzugsweise 6 Meter unterhalb einer Grundstücksfläche bzw. einer Bodennarbe vergraben sein. Vorzugsweise umfasst der Wasservorratsbehälter eine Wasseraufbereitungsanlage oder ist mit einer Wasseraufbereitungsanlage verbunden.

Des Weiteren ist es möglich, dass ein Abflussrohr des Wasser-Überlaufsystems und/oder des Bodenablaufsystems in den Wasservorratsbehälter mündet/münden. Somit kann das überschüssige Wasser bzw. das abgelassene Wasser gesammelt und wiederverwendet werden.

Des Weiteren ist es möglich, dass insbesondere aufbereitetes Wasser des Wasservorratsbehälters in einen weiteren Wasserkreislauf gepumpt wird. Beispielsweise kann es sich bei dem weiteren Wasserkreislauf um ein Spülungs-System handeln. Demnach kann mit dem erfindungsgemäßen Gebäudeflächen-Pflanzsystem effektiv Wasser eingespart werden und beispielsweise für eine Toilettenspülung verwendet werden.

Die Aufbereitung des im Wasservorratsbehälter befindlichen Wassers kann in einer derartigen Qualität erfolgen, dass das aufbereitete Wasser beispielsweise in den Trinkwasserkreislauf eines Wohn- oder Bürogebäudes befördert wird.

Es ist möglich, dass ein/das Wasser-Überlaufsystem des Wasserbeckens mit mindestens einem Sekundär-Pflanzsystem, insbesondere einem Wand-Pflanzsystem oder einem Balkonkasten-Pflanzsystem oder einem Fassaden-Pflanzsystem, verbunden ist und eine Wasserversorgung für dieses Sekundär-Pflanzsystem bildet. Das Sekundär-Pflanzsystem ist in vertikaler Richtung in einer Ebene unterhalb des Wasserbeckens angeordnet. Mit anderen Worten kann das überschüssige Wasser des Wasserbeckens zur Bewässerung von Pflanzsystemen dienen, die in vertikaler Richtung unterhalb des Wasserbeckens angeordnet sind.

Das Wasserbecken kann mit anderen Worten mit Dachterrassenbegrünungen, Fassadenbegrünungen, Terrassenbegrünungen, Balkonbegrünungen, Hofflächenbegrünungen, sowie Raumbegrünungen mit Wandbegrünungs-, Becken- und Deckenbegrünungssystemen verbunden sein.

Es ist möglich, dass mehrere Sekundär-Pflanzsysteme ausgebildet sind, die sich auf unterschiedlichen horizontalen Ebenen befinden, wobei alle horizontalen Ebenen unterhalb des Wasserbeckens der Dacheinheit ausgebildet sind. Bei den horizontalen Ebenen kann es sich beispielsweise um die einzelnen Stockwerke eines Wohn- bzw. Bürogebäudes handeln.

Bei dem Sekundär-Pflanzsystem kann es sich des Weiteren um ein derartiges Pflanzsystem wie eingangs beschrieben, d.h. um ein Pflanzsystem mit einem Wasserbecken und einem darin befindlichen Moduleinsatz, handeln, wobei dieses Sekundär-Pflanzsystem unterhalb des beschriebenen Wasserbeckens und/oder unterhalb einer Dacheinheit eines Gebäudes ausgebildet ist. Das Sekundär-Pflanzsystem kann demnach auf einer weiteren Dacheinheit ausgebildet sein. Bei dieser Dacheinheit kann es sich beispielsweise um die Dacheinheit eines Carports oder eines Unterstandes oder eines Vordaches handeln.

In einer weiteren Ausführungsform der Erfindung ist es möglich, dass das Sekundär-Pflanzsystem, insbesondere ein Wand-Pflanzsystem oder ein Balkonkasten-Pflanzsystem oder ein Fassaden-Pflanzsystem, ein Sekundär-Wasser-Überlaufsystem aufweist, das mit mindestens einem weiteren Pflanzsystem, das in vertikaler Richtung in einer Ebene unterhalb des Sekundär-Pflanzsystems angeordnet ist, verbunden ist und eine Wasserversorgung für dieses weitere Pflanzsystem bildet. Mit anderen Worten kann jedes unterhalb der obersten Dacheinheit angeordnete Pflanzsystem ein eigenständiges Wasser-Überlaufsystem aufweisen, das wiederum zur Bewässerung bzw. Wasserversorgung für ein unterhalb dieses Pflanzsystems angeordnetes weiteres Pflanzsystem dient. Es wird eine kaskadenartige Bewässerung ausgebildet.

Zusätzlich ist es denkbar, dass das Gebäudeflächen-Pflanzsystem einen Zusatzbewässerungs-Kreislauf aufweist. Dabei kann es sich zum einen um eine Wasserleitung ausgehend von dem Wasservorratsbehälter in Richtung des Wasserbeckens der Dacheinheit handeln. Des Weiteren ist es möglich, dass dieser Zusatzbewässerungs-Kreislauf vom Hauswasser-Anschluss ausgehend ausgebildet ist. Somit kann auch in Trockenperioden das Wasserbecken des Gebäudeflächen-Pflanzsystems mit ausreichend Wasser befüllt werden.

In einer weiteren Ausführungsform der Erfindung kann das Gebäudeflächen-Pflanzsystem einen Wassersensor und/oder einen Nährstoffsensor umfassen. Damit können die im Wasser befindlichen Verunreinigungen und/oder Nährstoffe gemessen werden. Ausgehend von den gemessenen Werten kann beispielsweise das Wasser gewechselt und/oder gereinigt werden. Insbesondere ist es möglich, bei Detektierung schlechter Wasserwerte das im Wasserbecken befindliche Wasser vorzugsweise über das Bodenablaufsystem abzulassen, das Wasserbecken zu reinigen und anschließend mit frischem Wasser zu befüllen. Des Weiteren ist es möglich, dass abhängig von den im Wasser befindlichen Nährstoffen zusätzliche Nährstoffe hinzugefügt werden können.

Vorzugsweise weist das Gebäudeflächen-Pflanzsystem diesbezüglich eine Nährstoffzugabevorrichtung auf. Beispielsweise kann diese Nährstoffzugabevorrichtung automatisiert Nährstoffe in das Wasserbecken hinzufügen, sofern die detektierten Nährstoffwerte unter einen vorgegebenen Schwellwert fallen.

Des Weiteren ist es möglich, dass das im Wasservorratsbehälter befindliche Wasser als Trägermedium einer Kälte- und/oder Wärmevorrichtung dient. Insbesondere kann das Wasser als Trägermedium einer Sorptionskältemaschine und/oder einer Sorptionswärmemaschine dienen. Das im Wasservorratsbehälter gesammelte Wasser kann somit zusätzlich zur Wassererwärmung und/oder Wasserkühlung genutzt werden. Es ist möglich, das Wasserbecken zu temperieren. Das als Trägermedium verwendete Wasser kann zusätzlich zur Raumklimatisierung verwendet werden. Mit anderen Worten ist es möglich, die Räume eines Wohn- oder Bürogebäudes aufgrund des gesammelten Wassers zu temperieren.

Des Weiteren ist es möglich, aus dem im Wasservorratsbehälter befindlichen Wasser im Sinne eines Wärmetauschers Energie zu gewinnen. Mit Hilfe des erfindungsgemäßen Gebäudeflächen-Pflanzsystems kann somit nicht nur ein Bewässerungssystem, sondern auch ein Energiegewinnungssystem zur Verfügung gestellt werden. Das erfindungsgemäße Gebäudeflächen-Pflanzsystem zeichnet sich durch einen äußerst geringen Wasserverbrauch aus, wobei überschüssiges Wasser recycelt und wiederverwendet werden kann.

In einer weiteren Ausführungsform der Erfindung weist mindestens ein Moduleinsatz eine Diebstahlsicherung auf. Vorzugsweise ist die Diebstahlsicherung als ein Querblech ausgebildet. Besonderes bevorzugt ist dieses Querblech abschließbar ausgebildet. Das Querblech ist zwischen einer Modulseitenwand und einem (horizontalen) Halteabschnitt ausgebildet. Aufgrund des Querblechs kann der (horizontale) Halteabschnitt nicht von Unbefugten von der Modulseitenwand gelöst werden.

Bei einer weiteren Ausführungsform umfasst das Gebäudeflächen-Pflanzsystem einen Kulturtopf für Pflanzen.

Der Kulturtopf weist dabei mindestens einen Kulturtopfmantel und einen Kulturtopfboden auf. Des Weiteren ist es möglich, dass der Kulturtopf eine Bewässerungsöffnung und/oder eine Wurzelwachstumsöffnung aufweist. Erfindungsgemäß weist der Kulturtopf eine Bewässerungsschnur auf. Die Bewässerungsschnur ist vorzugsweise am Kulturtopfboden und/oder am Kulturtopfmantel ausgebildet. Die Bewässerungsschnur saugt Wasser auf und transportiert dieses Wasser in den Kulturtopf.

Hierzu ist vorzugsweise ein Befestigungsabschnitt, an dem die Bewässerungsschnur am Kulturtopf befestigt ist, wasserdurchlässig ausgebildet, so dass das von der Bewässerungsschnur aufgesaugte Wasser in den Kulturtopf transportiert werden kann.

Die Bewässerungsschnur kann Glasfasern umfassen. Vorzugsweise besteht die Bewässerungsschnur aus Glasfasern, insbesondere aus einem Glasfaserbündel. Des Weiteren ist es möglich, dass die Bewässerungsschnur aus einem Textilmaterial besteht oder Textilmaterial umfasst.

Mit Hilfe einer derartigen Bewässerungsschnur ist es möglich, dass in den Kulturtopf auch bei einem sinkenden Wasserstand in einem Wasserbecken oder einem Pflanzgefäß Wasser transportiert werden kann. Sofern der Wasserstand derart sinkt, dass die Bewässerungsöffnungen nicht mehr in das Wasser ragen, wäre normalerweise keine Bewässerung des Kulturtopfes mehr möglich. Eine Bewässerungsschnur kann demnach den Abstand zwischen dem Kulturtopfboden und der Wasseroberfläche überwinden und das Wasser aufsaugen und in den Kulturtopf transportieren.

Die Bewässerungsschnur kann auch als Bewässerungsdocht bezeichnet werden. Der Bewässerungsdocht kann in den Kulturtopf eingelegt sein. Die Bewässerungsschnur bzw. der Bewässerungsdocht hat mit seinen kapillaren Eigenschaften die Funktion, bei jungen Pflanzen mit wenig vorhandenen Wurzeln im Kulturtopf die Neubildung und Versorgung von Wurzeln zu unterstützen.

Bei einem weiteren Ausführungsbeispiel des Kulturtopfs wird dieser aus recyceltem Fischernetz gebildet.

Der Vorteil Kulturtöpfe aus recycelten Fischernetzen zu produzieren liegt darin, dass das Ausgangsmaterial an sich über eine hochkapillare Wirkung verfügt und zudem das Cradle to Cradle Prinzip zur Wirkung kommt.

Ein weiterer Aspekt der Erfindung betrifft ein erfindungsgemäßes Gebäudeflächen-Pflanzsystem, das einen Kulturtopf aufweist. Der Kulturtopf ist dabei vorzugsweise in dem Moduleinsatz des Gebäudeflächen-Pflanzsystems eingesetzt, wobei der Kulturtopfboden in einem Höhenabstand zu einem Boden des Wasserbeckens positioniert ist, wobei die Bewässerungsschnur das im Wasserbecken befindliche Wasser aufsaugt und eine im Kulturtopf befindliche Pflanze wässert. Der Moduleinsatz ist vorzugsweise als Topfeinsatz ausgebildet. Hinsichtlich der Ausbildung des Topfeinsatzes wird auf vorherige Erläuterungen verwiesen.

Im Folgenden werden anhand schematischer Zeichnungen Ausführungsbeispiele der Erfindung näher erläutert.

Es zeigen:
- Fig. 1: eine schematische Darstellung eines Gebäudeflächen-Pflanzsystems;
- Fig. 2: eine Querschnittsdarstellung eines Wasserbeckens eines erfindungsgemäßen Gebäudeflächen-Pflanzsystems;
- Fig. 3: eine Ausführungsform des Gebäudeflächen-Pflanzsystems mit mehreren Sekundär-Pflanzsystemen bzw. Pflanzsystem-Ebenen;
- Fig. 4: eine Prinzipdarstellung hinsichtlich eines Wasser-Überlaufsystems sowie eines Bodenablaufsystems;
- Fig. 5: ein Carport mit erfindungsgemäßem Gebäudeflächen-Pflanzsystem;
- Fig. 6: eine Prinzipdarstellung hinsichtlich eines großräumigen Gebäudeflächen-Pflanzsystems;
- Fig. 7: einen Kulturtopf in vom Moduleinsatz losgelösten Zustand mit Darstellung der Bewässerungsschnur;
- Fig. 8: eine schematische Querschnittsdarstellung hinsichtlich eines auf einer schrägen Dacheinheit ausgebildeten Wasserbeckens; und
- Fig. 9: eine schematische Querschnittsdarstellung hinsichtlich eines schrägen Dachelements mit einer Ausgleichsschüttung und darauf befindlichem Wasserbecken.

In der nachfolgenden Beschreibung werden für gleiche und gleichwirkende Teile dieselben Bezugsziffern verwendet.

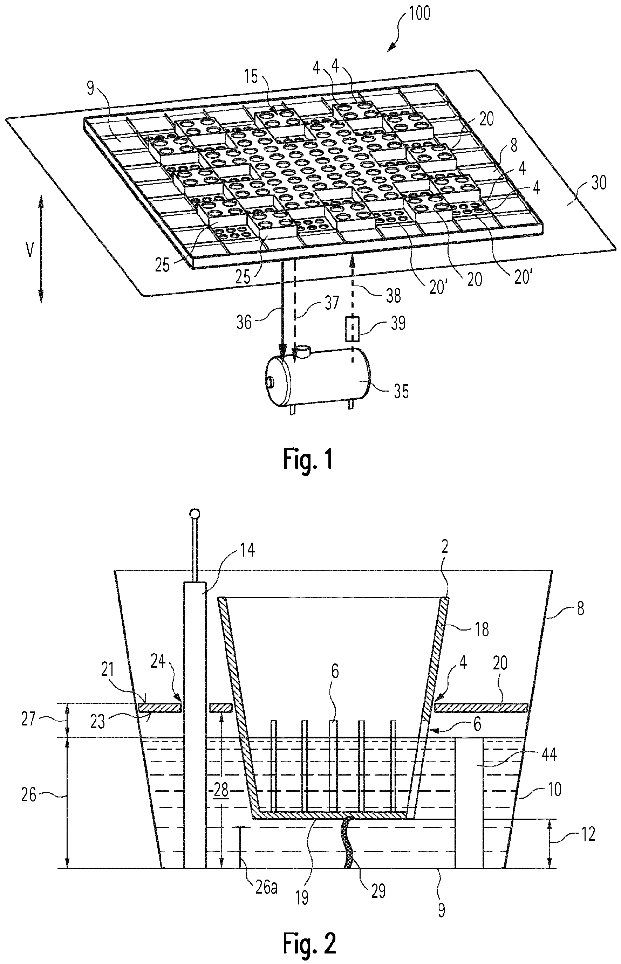

Fig. 1 zeigt den prinzipiellen Aufbau eines erfindungsgemäßen Gebäudeflächen-Pflanzsystems 100. Auf einer Dacheinheit 30 eines nicht dargestellten Gebäudes ist ein Wasserbecken 8 angeordnet. Dieses Wasserbecken 8 weist eine maximale Beckentiefe von 30 cm, insbesondere von 20 cm, insbesondere von 15 cm, insbesondere von 10 cm, auf. Der Wasserpegel in dem Wasserbecken 8 ist mit Hilfe eines Wasser-Überlaufsystems auf 10 cm - 25 cm, insbesondere auf einen Wasserpegel von 13 cm, eingestellt.

In dem Wasserbecken 8 sind mehrere Moduleinsätze 20, 20' ausgebildet, in dem Pflanzen, insbesondere Kulturtöpfe, einsetzbar sind. Die Moduleinsätze 20, 20' sind derart ausgebildet, dass pro Moduleinsatz mehrere Kulturtöpfe einsetzbar sind. Die Moduleinsätze 20 sind derart ausgebildet, dass jeweils vier Kulturtöpfe eingesetzt werden können. Gleichzeitig sind die Moduleinsätze 20 im Vergleich zu den Moduleinsätzen 20' höher gestellt. Sowohl die Moduleinsätze 20 als auch die Moduleinsätze 20' sind als Topfeinsätze ausgebildet. Hierzu weisen die Moduleinsätze 20 und 20' Kulturtopföffnungen 4 auf.

Die Moduleinsätze sind variabel gestaltbar. Die Moduleinsätze 20 sind für Pflanzen mit einem größeren Wurzelballen verwendbar. Die Moduleinsätze 20' weisen jeweils neun Kulturtopföffnungen 4 auf. Der Abstand zwischen den Moduleinsätzen 20' und dem Boden 9 des Wasserbeckens 8 ist dabei geringer als im Falle der Moduleinsätze 20. Des Weiteren sind Modulseitenwände 25 zu erkennen. Ein Moduleinsatz 20 kann demnach von vier Modulseitenwänden 25 gehalten werden. Der Moduleinsatz 20 bzw. der Moduleinsatz 20' kann mit mehreren Modulseitenwänden 25 verbunden sein. Ein Moduleinsatz 20 bzw. 20' bildet zusammen mit vier Modulseitenwänden 25 beispielsweise ein Pflanzmodul 15.

Das Wasserbecken 8 ist plan zur Dacheinheit 30 ausgebildet. Demnach kann das Wasserbecken 8 auf verschiedenen Dacheinheiten nachgerüstet werden. Es ist nicht notwendig, auf der Dacheinheit 30 Schrägen auszubilden.

Das Gebäudeflächen-Pflanzsystem 100 umfasst des Weiteren einen Wasservorratsbehälter 35, der in vertikaler Richtung V in einer Ebene unterhalb der Dacheinheit 30 bzw. unterhalb des Wasserbeckens 8 angeordnet ist. Der Wasservorratsbehälter 35 ist im vorliegenden Beispiel als Wassertank ausgebildet.

In den Wasservorratsbehälter 35 kann ein Abflussrohr 36 eines Wasser-Überlaufsystems sowie ein Abflussrohr 37 eines Bodenablaufsystems des Wasserbeckens 8 münden. In dem Wasservorratsbehälter 35 kann des Weiteren Regenwasser gesammelt werden.

Im dargestellten Beispiel umfasst das Gebäudeflächen-Pflanzsystem 100 des Weiteren ein Wasserversorgungsrohr 38. Dieses ist ausgehend vom Wasservorratsbehälter 35 in Richtung des Wasserbeckens 8 ausgebildet. Demnach kann ausgehend von dem Wasservorratsbehälter 35 Wasser in das Wasserbecken 8 gepumpt werden. Des Weiteren ist schematisch eine Nährstoffprüfungs- und Versorgungseinheit 39 dargestellt. Das zum Wasserbecken 8 zu pumpende Wasser kann demnach hinsichtlich der enthaltenen Nährstoffe überprüft werden. Sofern das Wasser keine ausreichenden Nährstoffe aufweist, können diese zusätzlich hinzugefügt werden.

Es ist auch möglich, dass der Moduleinsatz 20 mehrere Kulturtopföffnungen 4 aufweist. Sofern mehrere Moduleinsätze 20 in einem Wasserbecken 8 vorgesehen sind, ist es möglich, dass die Moduleinsätze 20 nicht an der Seitenwand 10 des Wasserbeckens 8 angebracht sind, sondern Modulseitenwände ausgebildet sind. Die Modulseitenwände und ein Moduleinsatz 20 bilden in einem derartigen Fall ein Pflanzmodul 15.

Aufgrund der geringen Wasserbeckentiefe und somit aufgrund einer geringen Wassermenge werden keine großen Lasten auf die Dacheinheit 30 aufgebracht. Der dargestellte Wasserkreislauf zeigt außerdem, dass das verwendete Wasser gesammelt und ggf. wiederaufbereitet werden kann. Des Weiteren kann gesammeltes Regenwasser zur (zusätzlichen) Bewässerung des Gebäudeflächen-Pflanzsystems 100 genutzt werden.

In Fig. 2 wird im Querschnitt ein Moduleinsatz 20, der als Topfeinsatz ausgebildet ist, dargestellt. Dieser Moduleinsatz 20 befindet sich im Wasserbecken 8. Im dargestellten Beispiel ist der Moduleinsatz 20 an den Seitenwänden 10 des Wasserbeckens 8 befestigt. Alternativ ist es möglich, dass der Moduleinsatz 20 auf den Seitenwänden 10 des Wasserbeckens 8 aufliegt.

Der Schnitt zeigt neben dem Moduleinsatz 20 einen Kulturtopf 2, der mehrere Bewässerungs- und Wurzelwachstumsöffnungen 6 aufweist. Die Öffnungen 6 dienen zur Bewässerung und insbesondere als Wurzelwachstumsöffnungen. So kann die Pflanze Wurzeln und insbesondere Nährstoffwurzeln ausbilden, die den gesamten Vegetationsraum 28 ausfüllen können. Der Kulturtopf 2 ist im Moduleinsatz 20, der als Topfeinsatz ausgebildet ist, in die Kulturtopföffnung 4 eingehängt. Insbesondere ist der Kulturtopf 2 in der Kulturtopföffnung 4 des Moduleinsatzes 20 form- und/oder kraftschlüssig eingesetzt.

In den Kulturtopf 2 kann organisches, anorganisches oder gemischtes Substrat eingefüllt werden. Die Substrate haben die Aufgabe, den Pflanzenwurzeln Halt zu geben und die Pflanze aufrecht zu halten. Die Bewässerungs- und Wurzelwachstumsöffnungen 6 können rund, oval, rechteckig oder wie dargestellt schlitzförmig ausgeführt sein. Die Bewässerungs- und Wurzelwachstumsöffnungen 6 befinden sich im Kulturtopfboden 19 und/oder im Kulturtopfmantel 18 des Kulturtopfes 2.

Der Moduleinsatz 20 hat des Weiteren eine Außenseite 21 und eine Innenseite 23. Der Kulturtopf 2 hat hingegen einen Kulturtopfboden 19 und einen Kulturtopfmantel 18. Das Wasserbecken 8 hat einen Boden 9 und Seitenwände 10.

Ein Höhenabstand 12 entsteht durch den Abstand zwischen dem Kulturtopfboden 19 und dem Boden 9 des Wasserbeckens 8. Der Höhenabstand 12 beträgt mindestens einen Zentimeter. Eine Füllhöhe 26 zeigt die Wasserstandshöhe von eingefülltem Wasser oder wässriger Nährlösung mit maximaler Höhe. Der Raum unterhalb des Moduleinsatzes 20 teilt sich in einen wasserführenden Bereich mit einer Wasserstandshöhe/einem Wasserpegel 26, die in der Fig. 2 einer maximalen Füllhöhe entspricht. Des Weiteren kann ein Überlauf 44 ausgebildet sein. Dieser bietet insbesondere bei Regenperioden oder bei Bewässerungsanlagen den Vorteil, dass eine Überwässerung ausgeschlossen wird und die maximale Füllhöhe nicht überschritten wird.

Ein Atmosphären-Bereich mit der Höhe 27 ergibt sich aus der Wasserstandshöhe 26 und dem Abstand zum Moduleinsatz 20. Der Atmosphären-Bereich 27 vergrößert oder reduziert sich entsprechend der Wasserstandshöhe 26. Die Füllmenge an Wasser (Wasserpegel) richtet sich nach der Höhe der Bewässerungs- und Wurzelwachstumsöffnungen 6, dem verwendeten Füllmaterial im Kulturtopf 2, dem Abstand des Kulturtopfbodens 19 zum Boden 9 des Wasserbeckens, der Größe des Wasserbeckens 8 und ist abhängig von der Kulturtopfgröße und der Größe der Pflanze.

Des Weiteren ist es möglich, dass der Moduleinsatz 20 mindestens eine Wasserstandsanzeigeröffnung 24 aufweist. Die Wasserstandsanzeigeröffnung 24 dient zum Positionieren und Halten eines Wasserstandsanzeigers 14. Der Wasserstandsanzeiger 14 kann von oben in die Wasserstandsanzeigeröffnung 24 eingeführt werden. Der Wasserstandsanzeiger 14 reicht bis auf den Boden 9 des Wasserbeckens 8. Der Wasserstandsanzeiger 14 kann als Wasserstandssensor ausgebildet sein.

Der Moduleinsatz 20 ist als Scheibe ausgeführt. Weiter ist der Moduleinsatz 20 aus einem korrosionsfesten Metall oder Edelstahl ausgebildet. Dies bietet den Vorteil, dass sich unterhalb des Moduleinsatzes 20 ein hervorragendes Wachstumsklima mit genügend Sauerstoff und hoher Luftfeuchtigkeit bildet, das zu einem optimalen Wurzelwachstum führt. Weiter kann die Verbindung zwischen dem Wasserbecken 8, dem Moduleinsatz 20 sowie dem Wasserstandsanzeiger 14 luftdicht ausgeführt sein. Dies führt dazu, dass verwendetes Füllmaterial oberhalb des Moduleinsatzes 20 trocken bleibt, wodurch Salzausblühungen oder Verfärbungen des Füllmaterials verhindert werden. Üblicherweise wird als Füllmaterial Zierkies verwendet, jedoch ist auch jedes andere optisch ansprechende Füllmaterial anwendbar. Dadurch, dass sich im Vegetationsraum 28, der sich aus dem Atmosphären-Bereich 27 und dem Wasserpegel 26 zusammensetzt, kein Substrat befindet, wird die Wasserfüllmenge wesentlich erhöht. Der Vegetationsraum 28 erstreckt sich von dem Boden 9 des Wasserbeckens 8 bis zum Moduleinsatz 20.

Aufgrund dessen, dass der Kulturtopf 9 nicht unmittelbar auf dem Boden 9 des Wasserbeckens 8 steht, kann keine Staunässe entstehen. Infolge von Staunässe kommt es häufig zu Sauerstoffmangel und damit verbunden zu Wurzelfäulnis. Weiterhin können sich Schwemmstoffe, die regelmäßig beim Düngen und Gießen freigesetzt werden, ohne nachteilige Wirkung am Boden 9 des Wasserbeckens 8 absetzen. Ein Zusetzen der Bewässerungs- und Wurzelwachstumsöffnungen 6 entsteht nicht.

Grundsätzlich resultiert aus der dargestellten Anordnung ein verbessertes Wachstumsklima im Vegetationsraum 28, mit einer entsprechenden Luftfeuchtigkeit. Weiter resultiert im Vegetationsbereich eine gute Durchlüftung des Wurzelwerks und ermöglicht eine gute Kulturtopf-Bodenbelüftung. Wasser, insbesondere eine wässrige Nährlösung, kann über die Bewässerungs- und Wurzelwachstumsöffnungen 6 überdies in den Kulturtopf 2 gelangen. Über die Luftfeuchtigkeit im Vegetationsraum 28 sowie über die Nährlösung ist ein idealer Ausgleich des Wasserhaushalts der Pflanze möglich.

In Fig. 2 ist des Weiteren dargestellt, dass der Kulturtopf 2 am Kulturtopfboden 19 eine Bewässerungsschnur 29 aufweist. Diese Bewässerungsschnur 29 besteht aus Glasfasern, insbesondere aus einem Glasfaserbündel. Die Bewässerungsschnur 29 bewirkt, dass bei einer sinkenden Wasserstandshöhe 26 auch noch Wasser, das sich unterhalb des Kulturtopfbodens 19 befindet, angesaugt und in den Kulturtopf 2 gefördert werden kann. Es wird eine verringerte Wasserstandshöhe 26a bzw. ein verringerter Wasserpegel angedeutet, die derart ausreichend ist, dass über die Bewässerungsschnur 29 Wasser bzw. eine wässrige Nährstofflösung in den Kulturtopf 2 gesaugt werden kann. Würde der Kulturtopf 2 lediglich die Bewässerungsöffnungen 6 aufweisen, könnte bei einer verringerten Wasserstandshöhe 26a kein Wasser in den Kulturtopf 2 gelangen, da die Bewässerungsöffnungen 6 in diesem Fall nicht von Wasser umgeben wären.

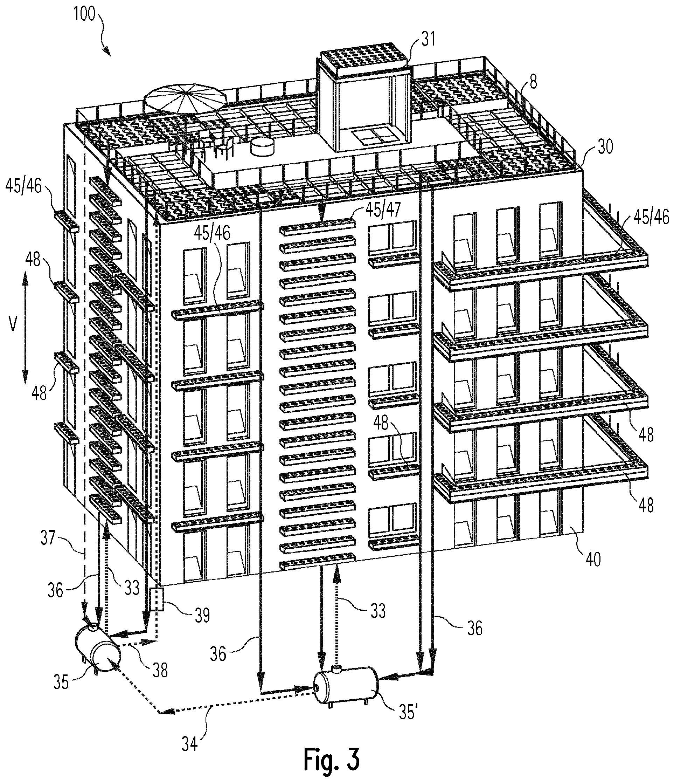

In Fig. 3 ist eine weitere Ausführungsform eines Gebäudeflächen-Pflanzsystems 100 dargestellt. Auf der Dacheinheit 30 des Wohngebäudes 40 ist demnach ein Wasserbecken 8 mit Moduleinsätzen 20 ausgebildet. Es sind mehrere Wasservorratsbehälter, nämlich ein erster Wasservorratsbehälter 35 sowie ein weiterer Wasservorratsbehälter 35' ausgebildet. Die Wasservorratsbehälter 35 und 35' befinden sich in vertikaler Richtung V unterhalb der Dacheinheit 30. Die Wasserbehälter 35 bzw. 35' können 6 Meter unterhalb des Grundstückniveaus des Wohngebäudes 40 ausgebildet sein. Wie bereits im Zusammenhang mit Fig. 1 dargestellt, kann in den Wasservorratsbehälter 35 sowohl ein Abflussrohr 36 eines Wasser-Überlaufsystems als auch ein Abflussrohr 37 eines Bodenablaufsystems des Wasserbeckens 8 münden. Auch das Wasserversorgungsrohr 38 mit der Nährstoffprüfungs- und Versorgungseinheit 39 ist dargestellt.

Des Weiteren ist ein Versorgungsrohr 34 dargestellt. Dieses dient zur Wasserversorgung zwischen den beiden Wasservorratsbehältern 35 und 35'.

Wie in Fig. 3 des Weiteren anschaulich dargestellt ist, kann auf der Dacheinheit 30 eine Überdachung 31 ausgebildet sein. Auf dieser Überdachung 31 kann wiederum ein Wasserbecken mit entsprechenden Moduleinsätzen angeordnet sein.

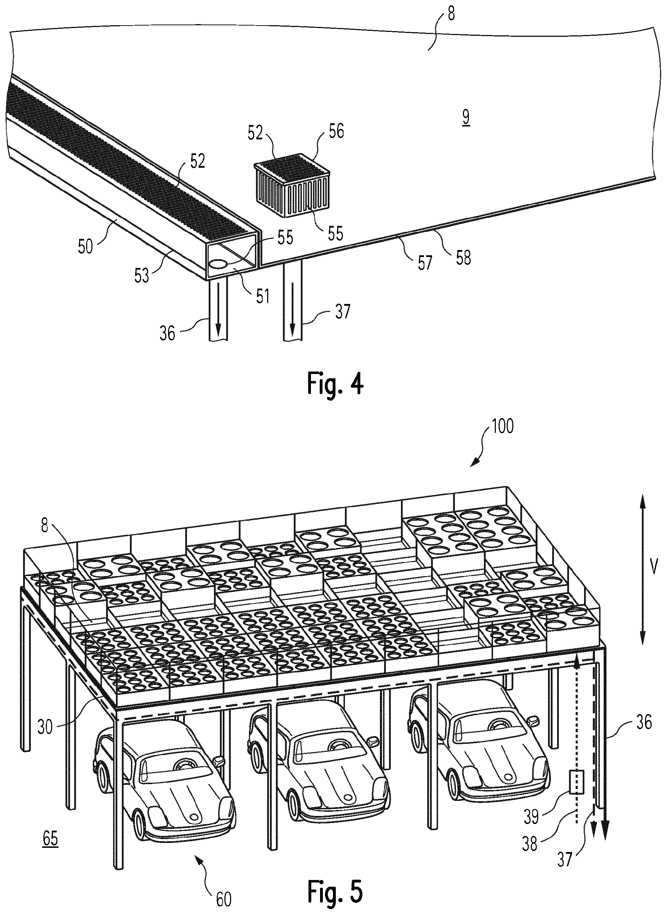

Das Gebäudeflächen-Pflanzsystem 10 weist des Weiteren Sekundär-Pflanzsysteme 45 auf. Dabei kann es sich um Wand-Pflanzsysteme 47 sowie um Balkonkasten-Pflanzsysteme 46 handeln. Die Sekundär-Pflanzsysteme 45 sind in vertikaler Richtung V in einer Ebene unterhalb der Dacheinheit 30 bzw. unterhalb des Wasserbeckens 8 angeordnet. Ein Wasser-Überlaufsystem (wie in Fig. 4 dargestellt) des Wasserbeckens 8 ist mit diesen Sekundär-Pflanzsystemen 45 verbunden und bildet eine Wasserversorgung für diese Sekundär-Pflanzsysteme 45. Demnach kann ausgehend vom Wasserbecken 8 das Wasser, insbesondere nährstoffreiche Wasserlösung, in darunter befindliche Ebenen fließen und dort zusätzlich zur Bewässerung von Pflanzen beitragen.

Auch die Sekundär-Pflanzsysteme 45 können über Wasser-Überlaufsysteme, nämlich Sekundär-Wasser-Überlaufsysteme, verfügen, so dass weitere Pflanzsysteme 48, die in vertikaler Richtung V in einer Ebene unterhalb der Sekundär-Pflanzsysteme 45 angeordnet sind, aufgrund dieser Sekundär-Wasser-Überlaufsysteme mit Wasser versorgt werden können.

In Fig. 3 ist des Weiteren angedeutet, dass ausgehend von Wasservorratsbehältern 35 und 35' Wasserversorgungsleitungen 33 für die Wand-Pflanzsysteme 47 ausgebildet sein können. Demnach kann das in den Wasservorratsbehältern 35, 35' gesammelte Wasser nicht nur in Richtung der Dacheinheit 30 gepumpt werden, sondern auch lediglich zur Wasserversorgung von Pflanzsystemen auf niedrigerem Höhenniveau dienen.

In Fig. 4 ist ein leeres Wasserbecken 8 mit dem Boden 9 dargestellt. Es ist zu erkennen, dass ein Wasser-Überlaufsystem 50 ausgebildet ist. Dieses Wasser-Überlaufsystem 50 ist seitlich des Wasserbeckens 8 angeordnet und umfasst eine Überflutungsrinne 51. Das in der Überflutungsrinne 51 befindliche Wasser kann über das Abflussrohr 36 abfließen. Bei einer Überschreitung der maximalen Beckentiefe t kann das Wasser zunächst über die Filtervorrichtung 52 in die seitliche Überflutungsrinne 51 fließen. Die Beckentiefe t ist derart ausgebildet, dass ein Wasserpegel von insbesondere 13 cm im Wasserbecken 8 eingestellt ist.

Das Wasser gelangt von der Überflutungsrinne 51 in das Abflussrohr 36, um anschließend im Wasservorratsbehälter 35 gesammelt zu werden. Die Filtervorrichtung 52 der Überflutungsrinne 51 ist als Abdeckgitter ausgebildet.

Des Weiteren kann es vorgesehen sein, dass die Öffnung des Abflussrohres 36 einen Feinfilter 55 aufweist.

Außerdem ist im Boden 9 des Wasserbeckens 8 ein Bodenablaufsystem 56 ausgebildet. Das Bodenablaufsystem 56 weist eine Revisionsöffnung auf. Sofern das Wasserbecken 8 gereinigt werden soll oder beispielsweise vor der Wintersaison entleert werden soll, kann das im Wasserbecken 8 befindliche Wasser schnell über das Bodenablaufsystem 56 entleert werden.

Das Wasser gelangt durch das Bodenablaufsystem 56 in das Abflussrohr 37. In der Öffnung des Abflussrohres 37 kann wiederum ein Feinfilter 55 ausgebildet sein. Das Bodenablaufsystem 56 weist des Weiteren eine Filtervorrichtung 52 auf. In diesem Fall ist die Filtervorrichtung 52 als gitterartiges Gehäuse ausgebildet, das auf dem Boden 9 stehend angeordnet ist. Grobe Verschmutzungen wie z.B. Wurzeln, Blätter oder andere Pflanzenteile, können aufgrund einer derartigen Filtervorrichtung 52 nicht in das Abflussrohr 37 gelangen.

In Fig. 4 ist des Weiteren dargestellt, dass die Überflutungsrinne 51, die auch als Teil einer Dachrinne ausgebildet sein kann, eine Heizungsvorrichtung 53 aufweisen kann. Diese dient dazu, in kälteren Saisonen bzw. Jahreszeiten das abfließende Wasser entsprechend zu erwärmen, so dass eine Überflutungsrinne 51 bzw. Dachrinne die Wärme entsprechend auf das darin befindliche Wasser weiterleiten kann. Das in der Überflutungsrinne 51 befindliche Wasser kann demnach nicht einfrieren.

Des Weiteren ist in Fig. 4 dargestellt, dass der Boden des Wasserbeckens 8 eine Wurzelschutzfolie 57 aufweisen kann. Die Wurzelschutzfolie 57 verhindert, dass die Wurzeln von eingepflanzten Pflanzen die Dacheinheit beschädigen. Des Weiteren ist es vorgesehen, dass unterhalb der Wurzelschutzfolie 57 eine Abdichtung, insbesondere eine Abdichtungsfolie 58, ausgebildet ist. Die Wurzelschutzfolie 57 und/oder die Abdichtungsfolie 58 kann/können in weiteren Ausführungsformen eines Wasserbeckens 8 eines Gebäudeflächen-Pflanzsystems 100 ausgebildet sein.

Fig. 5 zeigt eine weitere Anwendungsmöglichkeit eines Gebäudeflächen-Pflanzsystems 100. Dieses ist auf der Dacheinheit 30 eines Carports 60 angeordnet. Es können somit zusätzliche Begrünungsflächen geschaffen werden, die mit einem äußerst effizienten Bewässerungssystem ausgestattet sind.

Bezüglich der Abflussrohre 36 und 37 und hinsichtlich des Wasserversorgungsrohrs 38 gilt vorher Ausgeführtes. Die Abflussrohre 36 und 37 münden vorzugsweise in einen Wasservorratsbehälter 35. Außerdem ist es möglich, dass Sekundär-Pflanzsysteme (nicht dargestellt) ausgebildet sind. Diese können sich auf der Bebauungsoberfläche 65 befinden. Es ist daher möglich, dass ein Wasser-Überlaufsystem mit Sekundär-Pflanzsystemen verbunden ist, die auf einer Ebene angeordnet sind, die in vertikaler Richtung V unterhalb der Dacheinheit 30 ausgebildet ist.

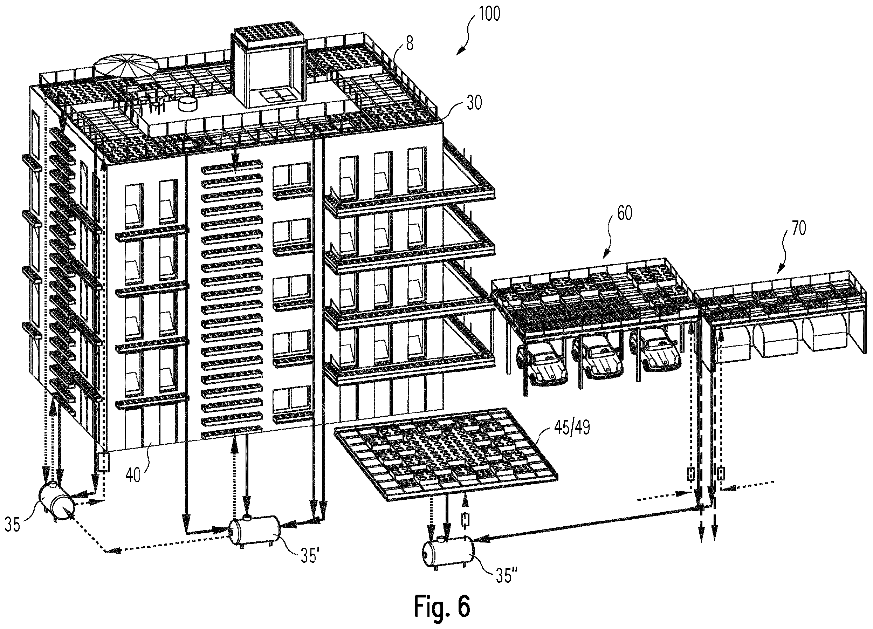

In Fig. 6 wird zusammenfassend dargestellt, welche umfangreichen Anwendungsmöglichkeiten hinsichtlich der Anordnung von Wasserbecken 8 bestehen. Es ist möglich, dieses auf der Dacheinheit 30 des Wohngebäudes 40 auszubilden. Bezüglich des Wohngebäudes 40 und dem entsprechend ausgebildeten Bewässerungssystem wird auf die Erläuterungen im Zusammenhang mit Fig. 3 verwiesen.

Zusätzlich ist es denkbar, einen Carport 60 oder eine Überdachung 70 mit einem entsprechenden Wasserbecken auszubilden. Die Überdachung 70 kann beispielsweise zur Überdachung von Mülltonnen oder ähnlichen Gerätschaften dienen.

Es ist möglich, Sekundär-Pflanzsysteme 45, im dargestellten Beispiel ein Boden-Pflanzsystem 49, mit Hilfe des aus dem Becken 8 des Carports 60 bzw. der Überdachung 70 überlaufenden Wassers zu speisen. Sowohl das Wasserbecken 8 des Carports 60 als auch das Wasserbecken 8 der Überdachung 70 können ein Wasser-Überlaufsystem 50 und/oder ein Bodenablaufsystem 56 aufweisen.

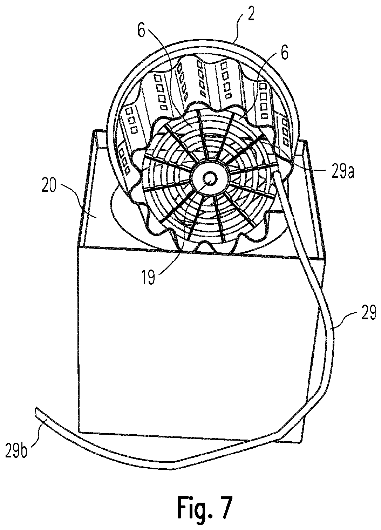

In Fig. 7 ist ein Kulturtopf 2 in einem vom Moduleinsatz 20 losgelösten Zustand dargestellt. Zu erkennen ist insbesondere der Kulturtopfboden 19. Im Kulturtopfboden 19 sind zahlreiche Bewässerungsöffnungen bzw. Wurzelwachstumsöffnungen 6 ausgebildet. Ebenfalls zu erkennen ist die Bewässerungsschnur 29. Diese ist durch eine der Bewässerungs- bzw. Wurzelwachstumsöffnungen 6 durchgeführt. Ein Ende 29a der Bewässerungsschnur 29 ist dabei innerhalb des Kulturtopfes 2 ausgebildet. Das Ende 29a kann in mehreren Schleifen gelegt sein und in den Kulturtopf eingelegt sein. Das weitere Ende 29b der Bewässerungsschnur 29 ist hingegen durch die Bewässerungs- bzw. Wurzelwachstumsöffnung 6 hindurchgeführt und liegt vorzugsweise auf einem Boden eines Wasserbeckens auf.

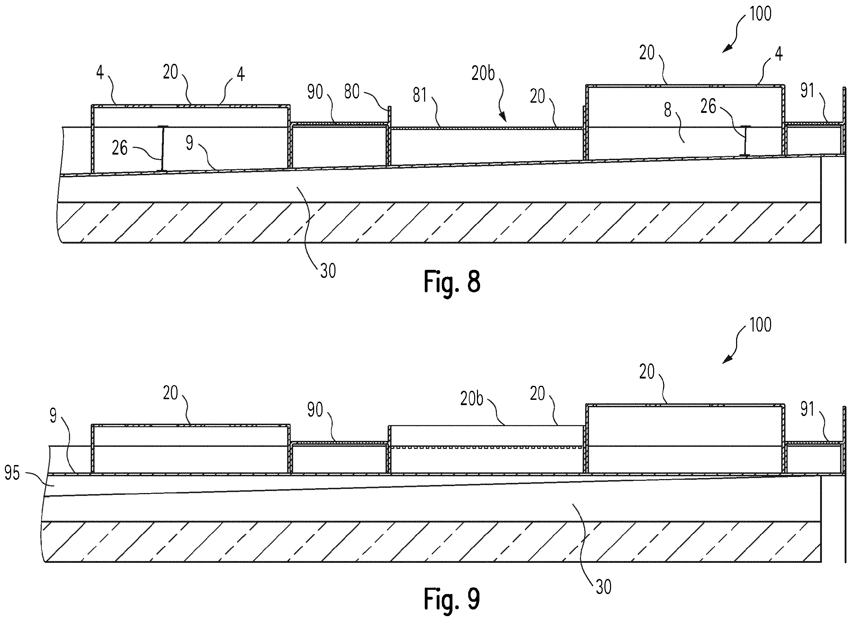

In Fig. 8 ist ein weiteres Wasserbecken 8 im Querschnitt dargestellt. Dieses Wasserbecken 8 befindet sich auf einer schrägen Dacheinheit 30. Im dargestellten Beispiel sind drei Moduleinsätze 20 ausgebildet. Die beiden äußeren Moduleinsätze 20 sind als Topfeinsätze ausgebildet. In die Kulturtopföffnungen 4 können Kulturtöpfe eingesetzt werden. Es ist zu erkennen, dass diese beiden Moduleinsätze 20 unterschiedliche Höhenniveaus aufweisen.

Des Weiteren ist ein Moduleinsatz 20b ausgebildet. Bei diesem Moduleinsatz 20b handelt es sich um einen sogenannten Vegetationskorb. Diese besteht aus einem Rahmen 80, an dem ein lochsiebartiges Element 81 ausgebildet ist. Dieser Moduleinsatz 20b bzw. der Vegetationskorb dient als Auflagefläche für eine Vegetationsdecke.

Zwischen zwei Moduleinsätzen 20, nämlich dem linken Moduleinsatz 20 und dem mittleren Moduleinsatz 20b ist ein Gehwegelement 90 ausgebildet. Dieses dient dazu, dass Personen zwischen den Moduleinsätzen gehen können und Arbeiten, insbesondere Schnittarbeiten, an den in den Moduleinsätzen befindlichen Pflanzen vorgenommen werden können. Auch das Austauschen von Pflanzen in Zusammenhang mit den Moduleinsätzen 20 ist aufgrund des Begehens einzelner Abschnitte des Wasserbeckens möglich.

Der Boden 9 des Wasserbeckens 8 ist an die Dachneigung der Dacheinheit 30 angepasst. Der Boden 9 liegt plan auf der Dacheinheit 30 auf. Daher werden in dem Wasserbecken 8 unterschiedliche Wasserpegel bzw. Wasserstandshöhen 26 gebildet. Um die unterschiedlichen Höhen entsprechend ausgleichen zu können, sieht das Gebäudeflächen-Pflanzsystem 100 erfindungsgemäß ein Ausgleichselement 91 vor. Mit diesem Ausgleichselement 91 wird bewirkt, dass die Moduleinsätze 20 in hinsichtlich des Wasserpegels 26 idealen Abschnitten des Wasserbeckens 8 ausgebildet sein können.

In Fig. 9 wird ein ähnliches Gebäudeflächen-Pflanzsystem 100 dargestellt. Auch in diesem Fall ist die Dacheinheit schräg ausgebildet. Zwischen der Dacheinheit 30 und dem Boden 9 des Wasserbeckens 8 kann eine Ausgleichsschüttung 95 ausgebildet sein. Diese dient dazu, dass der Boden 9 nicht schräg ausgebildet sein muss, sondern in einer horizontalen Ebene ausgebildet ist. Der Wasserpegel bzw. die Wasserhöhe 26 ist somit über die gesamte Breite bzw. Länge des Wasserbeckens 8 hinweg gleich ausgebildet. Auch in diesem Zusammenhang können Gehwegelemente 90 sowie Ausgleichselemente 91 ausgebildet sein.

### Bezuaszeichenliste

- 2: Kulturtopf
- 4: Kulturtopföffnung
- 6: Bewässerungsöffnung/Wurzelwachstumsöffnung
- 8: Wasserbecken
- 9: Boden Wasserbecken
- 10: Seitenwand Wasserbecken
- 12: Höhenabstand
- 14: Wasserstandsanzeiger
- 15: Pflanzmodul
- 18: Kulturtopfmantel
- 19: Kulturtopfboden
- 20, 20': Moduleinsatz/Topfeinsatz
- 20b: Moduleinsatz/Vegetationskorb
- 21: Außenseite des Moduleinsatzes
- 23: Innenseite des Moduleinsatzes
- 24: Wasserstandsanzeigeröffnung
- 25: Modulseitenwand
- 26: Wasserstandshöhe
- 26a: Verringerte Wasserstandshöhe
- 27: Höhe des Atmosphärenbereichs
- 28: Vegetationsraum
- 29: Bewässerungsschnur
- 29a, 29b: Ende Bewässerungsschnur
- 30: Dacheinheit
- 31: Überdachung
- 34: Versorgungsrohr
- 35, 35', 35": Wasservorratsbehälter
- 36: Abflussrohr Wasser-Überlaufsystem
- 37: Abflussrohr Bodenablaufsystem
- 38: Wasserversorgungsrohr
- 39: Nährstoffprüf- und -versorgungseinheit
- 40: Wohngebäude
- 44: Überlauf
- 45: Sekundär-Pflanzsystem
- 46: Balkonkasten-Pflanzsystem
- 47: Wand-Pflanzsystem
- 48: Weiteres Pflanzsystem
- 49: Boden-Pflanzsystem
- 50: Wasser-Überlaufsystem
- 51: Überflutungsrinne
- 52: Filtervorrichtung
- 53: Heizungsvorrichtung
- 55: Feinfilter
- 56: Bodenablaufsystem
- 57: Wurzelschutzfolie
- 58: Abdichtungsfolie
- 60: Carport
- 65: Bebauungsfläche
- 70: Überdachung
- 80: Rahmen
- 81: Lochsiebartiges Element
- 90: Gehwegelement
- 91: Ausgleichselement
- 95: Ausgleichsschüttung
- 100: Gebäudeflächen-Pflanzsystem
- t: Beckentiefe
- V: Vertikale Richtung

## Patentansprüche

1. Gebäudeflächen-Pflanzsystem (100), umfassend mindestens ein auf einem Gebäude (40, 60, 70) angeordnetes Wasserbecken (8) mit einem Wasser-Überlaufsystem (50), das in dem Wasserbecken (8) einen Wasserpegel (26) von 10 cm - 25 cm einstellt, wobei in dem Wasserbecken (8) mindestens ein Moduleinsatz (20, 20') ausgebildet ist, in dem eine Pflanze, insbesondere ein Kulturtopf (2), einsetzbar oder auf dem eine Vegetationsdecke einsetzbar ist, wobei der Moduleinsatz (20, 20') derart ausgebildet ist, dass zwischen einem Boden (9) des Wasserbeckens (8) und dem Moduleinsatz (20, 20') ein Vegetationsraum (28) gebildet ist, der vom Wasserpegel (26) und einem zwischen dem Wasserpegel (26) und dem Moduleinsatz (20, 20') ausgebildeten Atmosphären-Bereich (27) gebildet ist, wobei das Wasserbecken (8) auf einer schrägen Dacheinheit (30) ausgebildet ist und die Dacheinheit (30) Teil eines Wohngebäudes (40) oder eines Bürogebäudes oder eines Carports (60) oder einer Garage oder einer Überdachung (31; 70) ist, und wobei
das Wasserbecken (8) plan zu der Dacheinheit (30) ausgebildet ist und der Boden des Wasserbeckens an die Dachneigung angepasst ist, so dass in dem Wasserbecken unterschiedliche Wasserpegel gebildet werden, und ferner umfasst das Gebäudeflächen-Pflanzsystem ein Ausgleichselement (91), wodurch die Moduleinsätze in hinsichtlich des Wasserpegels idealen Abschnitten des Wasserbeckens ausgebildet sein können.

2. Gebäudeflächen-Pflanzsystem (100) nach Anspruch 1,
**dadurch gekennzeichnet, dass**
der Moduleinsatz (20, 20') als Topfeinsatz ausgebildet ist, in dem ein Kulturtopf (2) einsetzbar ist, wobei der Kulturtopf (2) vorzugsweise einen Kulturtopfmantel (18) und einen Kulturtopfboden (19) aufweist und der Kulturtopfboden (19) in einem Höhenabstand (12) zu einem Boden (9) des Wasserbeckens (8) positioniert ist.

3. Gebäudeflächen-Pflanzsystem (100) nach einem der vorhergehenden Ansprüche, insbesondere nach Anspruch 1,
**dadurch gekennzeichnet, dass**
der Moduleinsatz (20b) einen Rahmen (80) umfasst, an dem ein lochsiebartiges Element (81) ausgebildet ist, das vorzugsweise als Auflagefläche für eine Vegetationsdecke ausgebildet ist.

4. Gebäudeflächen-Pflanzsystem (100) nach einem der vorhergehenden Ansprüche,
**gekennzeichnet durch**
- das Wasser-Überlaufsystem (50), das als seitlich des Wasserbeckens (8) angeordnete Überflutungsrinne (51) ausgebildet ist,
und/oder
- ein Bodenablaufsystem (56), das in einem/in dem Boden (9) des Wasserbeckens (8) ausgebildet ist.

5. Gebäudeflächen-Pflanzsystem (100) nach Anspruch 4,
**dadurch gekennzeichnet, dass**
das Wasser-Überlaufsystem (50) und/oder das Bodenablaufsystem (56) eine Filtervorrichtung (52; 55) aufweist/aufweisen.

6. Gebäudeflächen-Pflanzsystem (100) nach einem der vorangegangenen Ansprüche,
**gekennzeichnet durch**
einen Wasservorratsbehälter (35; 35'; 35"), der in vertikaler Richtung (V) in einer Ebene unterhalb des Wasserbeckens (8) angeordnet ist, wobei der Wasservorratsbehälter (35; 35'; 35") vorzugsweise eine Wasseraufbereitungsanlage umfasst oder mit einer Wasseraufbereitungsanlage verbunden ist.

7. Gebäudeflächen-Pflanzsystem (100) nach Anspruch 4 und 6,
**dadurch gekennzeichnet, dass**
ein Abflussrohr (36) des Wasser-Überlaufsystems (50) und/oder ein Abflussrohr (37) des Bodenablaufsystems (56) in einen Wasservorratsbehälter (35; 35'; 35") mündet/münden.

8. Gebäudeflächen-Pflanzsystem (100) nach einem der vorhergehenden Ansprüche,
**dadurch gekennzeichnet, dass**
das Wasser-Überlaufsystem (50) des Wasserbeckens (8) mit mindestens einem Sekundär-Pflanzsystem (45), insbesondere einem Wand-Pflanzsystem (47) oder einem Balkonkasten-Pflanzsystem (46), das in vertikaler Richtung (V) in einer Ebene unterhalb des Wasserbeckens (8) angeordnet ist, verbunden ist und eine Wasserversorgung für dieses Sekundär-Pflanzsystem (45) bildet.

9. Gebäudeflächen-Pflanzsystem (100) nach Anspruch 8,
**dadurch gekennzeichnet, dass**
das Sekundär-Pflanzsystem (45) ein Sekundär-Wasser-Überlaufsystem aufweist, das mit mindestens einem weiteren Pflanzsystem (48), das in vertikaler Richtung (V) in einer Ebene unterhalb des Sekundär-Pflanzsystems (45) angeordnet ist, verbunden ist und eine Wasserversorgung für dieses weitere Pflanzsystem (48) bildet.

10. Gebäudeflächen-Pflanzsystem (100) nach Anspruch 6 oder 7,
**dadurch gekennzeichnet, dass**
das im Wasservorratsbehälter (35; 35'; 35") befindliche Wasser als Trägermedium einer Kälte- und/oder Wärmevorrichtung, insbesondere einer Sorptionskältemaschine und/oder einer Sorptionswärmemaschine, dient.

11. Gebäudeflächen-Pflanzsystem (100) nach Anspruch 2,
**gekennzeichnet durch**
eine am Kulturtopfboden (19) und/oder am Kulturtopfmantel (18) ausgebildete Bewässerungsschnur (29).

12. Gebäudeflächen-Pflanzsystem (100) nach Anspruch 11,
**dadurch gekennzeichnet, dass**
die Bewässerungsschnur (29) aus Glasfasern, insbesondere einem Glasfaserbündel, besteht.

13. Gebäudeflächen-Pflanzsystem (100) nach Anspruch 11 oder 12,
**dadurch gekennzeichnet, dass**
der Kulturtopf (2) in dem Moduleinsatz (20; 20') eingesetzt ist und der Kulturtopfboden (19) in einem Höhenabstand (12) zu einem Boden (9) des Wasserbeckens (8) positioniert ist, wobei die Bewässerungsschnur (29) das im Wasserbecken (8) befindliche Wasser aufsaugt und eine im Kulturtopf (2) befindliche Pflanze wässert.

## Claims

1. A planting system (100) for building surfaces, comprising
at least one water basin (8) arranged on a building (40, 60, 70) and having a water overflow system (50) adjusting a water level (26) of 10 cm to 25 cm within the water basin (8), wherein at least one module insert (20, 20') is formed in the water basin (8), into which a plant, in particular a cultivation pot (2) is insertable or onto which a vegetation cover is insertable, wherein the module insert (20, 20') is designed such that between a bottom (9) of the water basin (8) and the module insert (20, 20'), a vegetation space (28) is formed, which is formed by a water level (26) and an atmosphere portion (27) formed between the water level (26) and the module insert (20, 20'), wherein the water basin (8) is designed on an oblique roof unit (30), and the roof unit (30) is a part of a residential building (40) or of an office building or of a carport (60) or a garage or a roofing (31; 70), and wherein
the water basin (8) is designed to be planar to the roof unit (30), and the bottom of the water basin is adapted to the roof inclination so that different water levels are formed within the water basin, and furthermore the planting system for building surfaces comprises a compensation element (91), whereby the module inserts may be designed in ideal portions of the water basin with respect to the water level.

2. The planting system (100) for building surfaces according to claim 1,
**characterized in that**
the module insert (20, 20') is designed as a pot insert into which a cultivation pot (2) is insertable, wherein the cultivation pot (2) preferably includes a cultivation pot envelope (18) and a cultivation pot bottom (19), and the cultivation pot bottom (19) is positioned at a height distance (12) from a bottom (9) of the water basin (8).

3. The planting system (100) for building surfaces according to any one of the preceding claims, in particular according to claim 1,
**characterized in that**
the module insert (20b) comprises a frame (80), on which a perforated screen-like element (81) is designed, which is preferably designed as a resting surface for a vegetation cover.

4. The planting system (100) for building surfaces according to any one of the preceding claims,
**characterized by**
- the water overflow system (50) designed as a flooding channel (51) being arranged laterally of the water basin (8),
and/or
- a bottom drainage system (56) being designed in a/the bottom (9) of the water basin (8).

5. The planting system (100) for building surfaces according to claim 4,
**characterized in that**
the water overflow system (50) and/or the bottom drainage system (56) include/includes a filtering device (52; 55).

6. The planting system (100) for building surfaces according to any one of the preceding claims,
**characterized by**
a water reservoir (35; 35'; 35") being arranged in the vertical direction (V) in a plane below the water basin (8), wherein the water reservoir (35; 35'; 35") preferably comprises a water treatment plant or is connected to a water treatment plant.

7. The planting system (100) for building surfaces according to claims 4 and 6,
**characterized in that**
a discharge tube (36) of the water overflow system (50) and/or a discharge tube (37) of the bottom drainage system (56) open/opens into a water reservoir (35; 35'; 35").

8. The planting system (100) for building surfaces according to any one of the preceding claims,
**characterized in that**
the water overflow system (50) of the water basin (8) is connected to at least one secondary planting system (45), in particular a wall planting system (47) or a balcony box planting system (46) arranged in the vertical direction (V) in a plane below the water basin (8), and forms a water supply for this secondary planting system (45).

9. The planting system (100) for building surfaces according to claim 8,
**characterized in that**
the secondary planting system (45) includes a secondary water overflow system which is connected to a further planting system (48) arranged in the vertical direction (V) in a plane below the secondary planting system (45) and forms a water supply for this further planting system (45).

10. The planting system (100) for building surfaces according to claim 6 or 7,
**characterized in that**
the water located within the water reservoir (35; 35'; 35") serves as a carrier medium of a refrigerating and/or heating device, in particular of a sorption refrigerating machine and/or a sorption heating machine.

11. The planting system (100) for building surfaces according to claim 2,
**characterized by**
an irrigation string (29) designed at the cultivation pot bottom (19) and/or at the cultivation pot envelope (18).

12. The planting system (100) for building surfaces according to claim 11,
**characterized in that**
the irrigation string (29) consists of glass fibres, in particular of a glass fibre bundle.

13. The planting system (100) for building surfaces according to claim 11 or 12,
**characterized in that**
the cultivation pot (2) is inserted into the module insert (20; 20'), and the cultivation pot bottom (19) is positioned at a height distance (12) from a bottom (9) of the water basin (8), wherein the irrigation string (29) absorbs the water located within the water basin (8) and waters a plant located within the cultivation pot (2).

## Revendications

1. Système de plantation pour surfaces de bâtiment (100), comprenant
au moins un bassin d'eau (8) disposé sur un bâtiment (40, 60, 70) et comprenant un système de trop-plein d'eau (50) qui règle un niveau d'eau (26) de 10 cm à 25 cm dans le bassin d'eau (8), sachant que dans le bassin d'eau (8) est constitué au moins un insert modulaire (20, 20') dans lequel une plante, en particulier un pot de culture (2), est insérable ou sur lequel une couverture végétale est insérable, sachant que l'insert modulaire (20, 20') est constitué de telle manière qu'entre un fond (9) du bassin d'eau (8) et l'insert modulaire (20, 20') soit formé un espace végétal (28) qui est formé par le niveau d'eau (26) et une zone atmosphérique (27) constituée entre le niveau d'eau (26) et l'insert modulaire (20, 20'), sachant que le bassin d'eau (8) est constitué sur une unité de toit (30) inclinée et l'unité de toit (30) fait partie d'un bâtiment d'habitation (40) ou d'un bâtiment de bureau ou d'un abri de voiture (60) ou d'un garage ou d'une toiture (31 ; 70), et sachant que
le bassin d'eau (8) est constitué de manière plane par rapport à l'unité de toit (30) et le fond du bassin d'eau est adapté à l'inclinaison de toit c'est pourquoi de différents niveaux d'eau soient formés dans le bassin d'eau, et le système de plantation pour surfaces de bâtiment comprend en outre un élément de compensation (91) par lequel les inserts modulaires peuvent être constitués dans des sections du bassin d'eau idéales eu égard au niveau d'eau.

2. Système de plantation pour surfaces de bâtiment (100) selon la revendication 1,
**caractérisé en ce que**
l'insert modulaire (20, 20') est constitué comme insert de pot dans lequel un pot de culture (2) est insérable, sachant que le pot de culture (2) présente de préférence une virole de pot de culture (18) et un fond de pot de culture (19) et le fond de pot de culture (19) est positionné à une distance de hauteur (12) par rapport à un fond (9) du bassin d'eau (8).

3. Système de plantation pour surfaces de bâtiment (100) selon l'une des revendications précédentes, en particulier selon la revendication 1,
**caractérisé en ce que**
l'insert modulaire (20b) comprend un cadre (80) au niveau duquel est constitué un élément (81) de type crible perforé qui est constitué de préférence comme surface de pose pour une couverture végétale.

4. Système de plantation pour surfaces de bâtiment (100) selon l'une des revendications précédentes,
**caractérisé par**
- le système de trop-plein d'eau (50), qui est constitué comme gouttière de débordement (51) disposée latéralement par rapport au bassin d'eau (8), et/ou
- un système d'évacuation de fond (56) qui est constitué dans un/le fond (9) du bassin d'eau (8).

5. Système de plantation pour surfaces de bâtiment (100) selon la revendication 4,
**caractérisé en ce que**
le système de trop-plein d'eau (50) et/ou le système d'évacuation de fond (56) présente/nt un dispositif de filtration (52 ; 55).

6. Système de plantation pour surfaces de bâtiment (100) selon l'une des revendications précédentes,
**caractérisé par**
un réservoir d'eau (35 ; 35' ; 35") qui est disposé en direction verticale (V) dans un plan sous le bassin d'eau (8), sachant que le réservoir d'eau (35 ; 35' ; 35") comprend de préférence une installation de traitement d'eau ou est relié à une installation de traitement d'eau.

7. Système de plantation pour surfaces de bâtiment (100) selon les revendications 4 et 6,
**caractérisé en ce que**
un tube d'écoulement (36) du système de trop-plein d'eau (50) et/ou un tube d'écoulement (37) du système d'évacuation de fond (56) débouche/nt dans un réservoir d'eau (35 ; 35' ; 35").

8. Système de plantation pour surfaces de bâtiment (100) selon l'une des revendications précédentes,
**caractérisé en ce que**
le système de trop-plein d'eau (50) du bassin d'eau (8) est relié à au moins un système de plantation secondaire (45), en particulier un système de plantation mural (47) ou un système de plantation en bacs de balcon (46), qui est disposé en direction verticale (V) dans un plan sous le bassin d'eau (8), et forme une alimentation en eau pour ce système de plantation secondaire (45).

9. Système de plantation pour surfaces de bâtiment (100) selon la revendication 8,
**caractérisé en ce que**
le système de plantation secondaire (45) présente un système de trop-plein d'eau secondaire qui est relié à au moins un système de plantation supplémentaire (48) qui est disposé en direction verticale (V) dans un plan sous le système de plantation secondaire (45), et forme une alimentation en eau pour ce système de plantation supplémentaire (48).

10. Système de plantation pour surfaces de bâtiment (100) selon la revendication 6 ou 7,
**caractérisé en ce que**
l'eau se trouvant dans le réservoir d'eau (35 ; 35' ; 35") sert de milieu de support d'un dispositif de froid et/ou de chaleur, en particulier d'une machine de froid à sorption et/ou d'une machine de chaleur à sorption.

11. Système de plantation pour surfaces de bâtiment (100) selon la revendication 2,
**caractérisé par**
un cordon d'irrigation (29) constitué au niveau du fond de pot de culture (19) et/ou au niveau de la virole de pot de culture (18).

12. Système de plantation pour surfaces de bâtiment (100) selon la revendication 11,
**caractérisé en ce que**
le cordon d'irrigation (29) est composé de fibres de verre, en particulier d'un faisceau de fibres de verre.

13. Système de plantation pour surfaces de bâtiment (100) selon la revendication 11 ou 12,
**caractérisé en ce que**
le pot de culture (2) est inséré dans l'insert modulaire (20 ; 20') et le fond de pot de culture (19) est positionné à une distance de hauteur (12) par rapport à un fond (9) du bassin d'eau (8), sachant que le cordon d'irrigation (29) aspire l'eau se trouvant dans le bassin d'eau (8) et irrigue une plante se trouvant dans le pot de culture (2).
